# EUROPEAN PATENT APPLICATION

(11) **EP 4 599 951 A1**
(43) Date of publication of application: **13.08.2025**
(21) Application number: 24305227.1
(22) Date of filing: 12.02.2024
(51) Int. Cl.: B08B 13/00, B41F 35/00, B05B 15/52, B05C 1/04, G01N 21/88

(54) **CLEANING SYSTEM OF A MOVING ELEMENT OF A COATING INSTALLATION, ASSOCIATED COATING MACHINE, COATING INSTALLATION AND METHOD**

(71) Applicant: ARMOR, 44100 Nantes (FR)
(72) Inventor: Derennes, Christophe Jacques André, 44310 SAINT PHILBERT DE GRAND LIEU (FR); DESBOIS, Maxime, 44220 COUËRON (FR); DUVAL, Rozen, Nathalie, 44120 VERTOU (FR)
(74) Representative: Lavoix

(57) **Abstract**

Cleaning system (20) adapted to clean the outer surface (22) of a roller (17) of a coating machine (10) adapted to coat and/or print and/or shape a layer on a web, the cleaning system (20) comprising:
- a robotic arm (24) comprising an holding organ (32),
- a cleaning device (26) held on the holding organ (32), the cleaning device (26) being adapted to clean the outer surface of the roller,
- a command unit (30) adapted to command the robotic arm (24) and the cleaning device (26) to carry out a cleaning task of a part of the outer surface,
the command unit (30) being adapted to receive at least one defect property and to trigger a cleaning task in accordance with each received defect property, a defect property being a property of at least one defect of the layer.

## Description

The present invention concerns a cleaning system adapted to clean the outer surface of a moving element, notably a roller, of a coating installation. The present invention also proposes a coating machine or a coating installation comprising the cleaning system. The present invention also concerns a method for cleaning the outer surface of a moving element of a coating installation.

A coating machine is used to transform a moving web. One common technique to transform the web is coating. Such technique requires the use of at least one coating machine.

Such coating machine is related to coating processes using rollers to apply, treat, coat, print, laminate, shape a chemical composition onto a web. Such coating machine may also comprise rollers to drive, carry or convey the web. Such coating processes enables to obtain a coating speed typically from 100 m/min up to 1000 m/min but this coating speed is impacted by the fact that the quality of the web coated film is in most cases not satisfying.

There is therefore a need for a system adapted to increase the efficiency of a coating machine.

To this end, the specification describes a cleaning system adapted to clean the outer surface of a moving element, notably a roller, of a coating installation, the coating installation comprising the coating machine adapted to coat and/or print and/or shape a layer on a web, the cleaning system comprising:
- a robotic arm comprising an holding organ,
- a cleaning device held on the holding organ, the cleaning device being adapted to clean the outer surface of the moving element,
- a command unit adapted to command the robotic arm and the cleaning device to carry out a cleaning task of a part of the outer surface of the moving element,
the command unit being adapted to receive at least one defect property and to trigger a cleaning task in accordance with each received defect property, a defect property being a property of at least one defect of the layer.

Such cleaning system enables to obtain an increased efficiency of the coating installation by reducing flaws, thereby leading to an improved process. The development of this cleaning system has been obtained by a research program carried out by the Applicant.

This research program and the different difficulties to be solved leading to the present invention are discussed hereinafter.

In practice, very high-speed coating machine (coating speed typically from 400 m/min up to 1000 m/min), using multiple cylinders to coat a thin layer of a solvent-based coating composition onto a thin PET web are used. Typically, the thickness of the web is below 5 µm for plastic webs and the coated layer has a weight basis of 1 g/m² (but 0.5 g/m² or less may be targeted).

The efficiency of such coating machines is impacted by several elements that should be reduced.

In particular, it is desirable to remove pollution / impurity, soiling, residue of ink off the cylinders (rollers) used during web coating process.

In one specific coating process, a coating composition is applied to the moving web by transferring a liquid coating composition from an application roller to the web. In this kind of process, a counter-roller (or back-up roller) is used to either or both carry the web and meter the liquid coating composition at the nip formed between the two rollers. The counter roller is often called the 'sleeve' because it is covered by a flexible, smooth, and elastic cover. During coating, the sleeve may be stained. Fouling of the sleeve has a direct impact on the quality of the coated web.

At the time, manual cleaning with a polishing pad is not sufficiently effective in removing fouling such as dirt, dust, solid particles, particularly dried ink splashes. The operator would intervene to clean the cylinder after detecting defects, creating additional delay, and increasing safety risks. In addition, the whole coating installation shall be stopped to remove ink splashes due to the machine's acceleration phase, annealing the benefits of the starting accelerating phase of production.

All these considerations have led the Applicant to examine the whole coating process and to determine that the cleaning process is a key point for the following reasons.

The automatization of the cleaning process improves quality, safety and productivity.

For the specific production of coated webs using solvent-based highly inflammable coating composition, the coating system shall be compliant with an ATEX environment, and the cleaning system is therefore placed in anti-explosive atmosphere. The cleaning environment is therefore constrained due to the presence of highly inflammable solvents and presents an additional risk of explosion due to the friction against the back-up roll and the use of the solvent to clean.

It is one objective to control the cleaning process (control friction and rubbing operations) in particular in an ATEX environment. One advantage is to reduce the risk of generating sparks and to reduce the effusion of highly inflammable solvents.

However, the cleaning process should also exhibit other advantages in non-ATEX atmospheres.

One other problem is to control the coating stage by reducing production stoppages, avoiding operator intervention on rotating cylinders (also called rolls or rollers) and improving the overall process efficiency.

Still another problem is to promote safety of operator, to avoid carriage of heavy loads.

In particular, operations such as transporting or handling rollers to clean the rollers / cylinder off-line are to be avoided.

Such cleaning system is designed to automatically clean the cylinders used in the coating process. The cylinder to be cleaned may be a roller fitted with an elastomer sleeve, and its maximum rotation speed may reach up to 3 200 rpm (revolutions per minute).

The main contaminants are dry materials such as waxes, resins, additives and pigments, and solvents such as 100/140 gasoline, toluene, ethyl acetate and methyl ethyl ketone (MEK) may be used for cleaning.

Semi-solid or solid substances may also be used for wiping out the sleeve such as gels or creams. Additionally, an electrostatic discharge additive may be added to the cleaning product.

Since the elements to be cleaned are in motion, it is difficult to assess the level of fouling during coating. One objective is to clean the cylinders during production at high speed, without frequently stopping the production line, while ensuring operator safety.

One challenge of the research project was therefore to robotize this cleaning stage so that operators no longer had to intervene on rotating cylinders or to stop the production for in-line or off-line roll cleaning. Data used to feed the cleaning operations may come from a control camera or any other in-line control system such as an in-line coating weight control unit.

According to further aspects of the cleaning system, which are advantageous but not compulsory, the cleaning system might incorporate one or several of the following features, taken in any technically admissible combination:
- the cleaning system further comprises an analyzing unit adapted to:
   - receive data coming from a sensor, the data being images of the layer coated and/or printed by the coating machine, and
   - analyze said data to detect at least one defect property of at least one defect of the layer.
- the cleaning device is provided with an interface unit, the interface unit being adapted to receive from a user pieces of information concerning at least one defect of the layer, the command unit being adapted to command the robotic arm and the cleaning device also in accordance with the pieces of information concerning at least one defect of the layer.
- at least one defect property detected by the analyzing unit is the presence or not of a defect.
- each defect is associated with a degree of defect, one defect property being the defect degree.
- the command unit is adapted to trigger a cleaning task when the defect degree of the detected defect exceeds a predefined defect degree.
- each defect of the layer belongs to a respective predefined group of defects, one defect property being the group of defects to which the defect belongs, the area characteristics of the area to be cleaned by the cleaning device being chosen in accordance with said defect property.
- one area characteristic is the surface of the area to be cleaned.
- one area characteristic is the localization of the center of the area to be cleaned, the localization of the center of the area to be cleaned being preferably chosen among three zones : a left lateral portion of the moving element, a central portion of the moving element and a right lateral portion of the moving element.
- the cleaning task is characterized by cleaning parameters and the command unit is adapted to calculate each cleaning parameter in function of the defect properties.
- the cleaning device comprises a cleaning pad adapted to be in contact with the part of the outer surface of the moving element, the cleaning pad having preferably an outer surface with a foam, the foam being notably a melamine foam.
- the cleaning device further comprises a cleaning pad, a solvent reservoir and a pressure unit, the pressure unit being adapted to send the solvent from the solvent reservoir to the cleaning pad.

The specification also concerns a coating machine comprising a cleaning system as previously described.

The specification also describes a coating installation comprising a cleaning system as previously described.

The specification also concerns a method for cleaning the outer surface of a moving element, notably a roller, of a coating installation, the coating installation comprising the coating machine adapted to coat and/or print and/or shape a layer on a web, the method being carried out by a cleaning system comprising:
- a robotic arm comprising an holding organ,
- a cleaning device held on the holding organ, the cleaning device being adapted to clean the outer surface of the moving element,
- a command unit adapted to command the robotic arm and the cleaning device to carry out a cleaning task of a part of the outer surface of the moving element,
the method comprising:
- receiving at least one defect property, a defect property being a property of at least one defect of the layer
- triggering a cleaning task in accordance with each received defect property.

The invention will be better understood on the basis of the following description which is given in correspondence with the annexed figures and as an illustrative example, without restricting the object of the invention. In the annexed figures:
- figure 1 is a side view of a coating installation,
- figure 2 is a representation of a coating machine implied in the coating process, and
- figure 3 is a schematic representation of a cleaning system, and

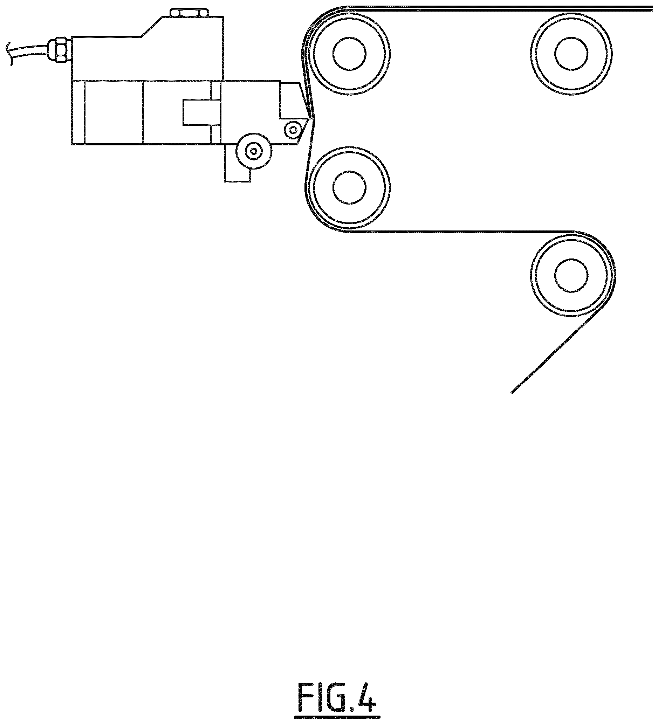

- figures 4 to 8 are schematic representations of examples of implementation of different specific coating processes.

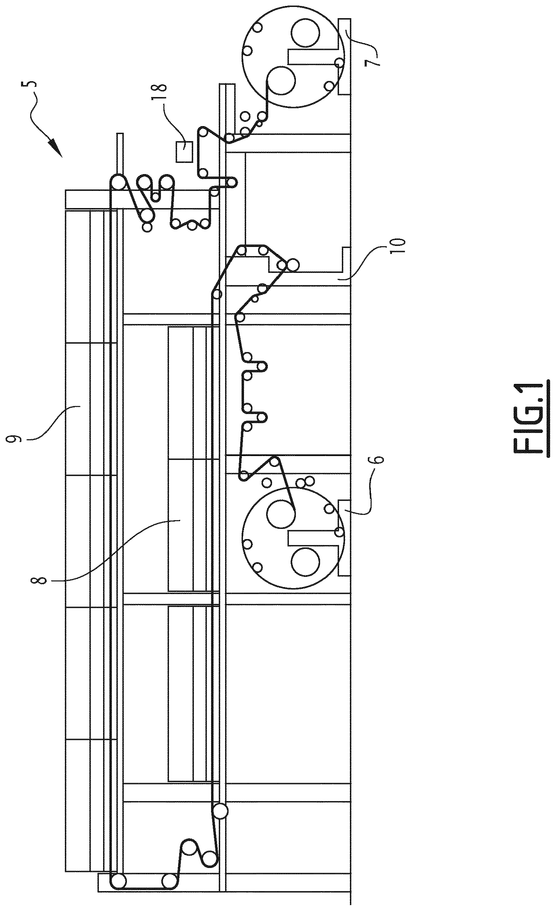

A coating installation 5 is schematically represented on figure 1.

The coating installation 5 is adapted to carry out a process for coating. Such process implies using all necessary machines, which are part of the coating installation 5.

More precisely, the process for coating comprises in this order at least the following steps: web unwinding, coating, and finally rewinding.

One or more optional steps to solidify the coated layer by cooling, drying, curing or otherwise shaping the coating composition may be added between coating and rewinding.

In accordance, the coating installation 5 comprises at least an unwinding machine 6, a rewinding machine 7, and a coating machine 10.

The unwinding machine 6 and the rewinding machine 7 are respectively adapted to unwind and rewind a spool of web at a given speed.

A drying machine 8 and/or a curing machine 9 are often required, according to the choice of the coating technology.

The drying machine 8 and the curing machine 9 are adapted to carry out techniques of film formation or dry coated layer formation by transformation of the liquid coated layer applied to the web into a solid coated layer. Depending on the final use of the coated web, the coated layer may be tack-free or remain sticky. A protective film or spacer may be added to avoid bonding coils and further allow spool unwinding.

Heat transfer using temperature-controlled rollers or air blowing, infra-red heating, ultraviolet curing and electronic beam radiation are examples of techniques used during film formation.

The coating machine 10 is a machine adapted to coat and/or print and/or shape a layer on a web 12.

A web refers to as any film, foil, sheet or like wherein the length and/or the width dimension are at least 10 times or 100 times superior to the thickness dimension.

The web may comprise any structure that is long, thin and flexible (paper, film, foil, nonwovens, textiles, plastic films, metal foils, impregnated textile, prepregs...). Optionally, the web exhibits a flat and/or flexible surface.

Such flat web may comprise any kind of materials such as metal, glass, paper, fabric, leather, plastic, particles, etc., in plain, in a laminate or in a blend of any combination. The flat web may be plain, rough, smooth, or open such as a net. The flat web may comprise a polymer such as polyester or polyimide. The flat web may be an aluminum or copper foil. The flat web is intended to be coated, laminated, embossed, or printed. The flat web maybe a multilayer web i.e. an already coated web or laminate.

Preferably, the flat web is designed and/or intended to be coated, printed, chemically treated, cut, slit, sliced, wound and/or unwound, cured or dried. The other face which is not coated is intended to be in contact with the outer face of the roller system to clean (counter-roller 17). The flat web may also come from a shape-forming manufacturing process such as cast or blown or extruded film.

Optionally, the flat web is a band.

The flat web may be a drive belt. The flat web may be used to carry objects or to drive elements in rotation.

In general, the hereby disclosed coating installation 5 may comprise a coating, a printing machine or any and all kinds of covering machines known by the skilled person, such as but not limited to machine for calendering or lamination operations.

The coating installation may comprise one or several coating machines to carry out by any and all coating technique, as a single coating technique or in combination.

Well-known techniques are for example gravure coating, porous roll coating, rotary screen printing, flexography, calendering, laminating or embossing.

Some specific examples are detailed hereinafter.

More information relative to the implantation of coating installations 5 are notably accessible from documents US 4270483, US 3851582 and US 5176077.

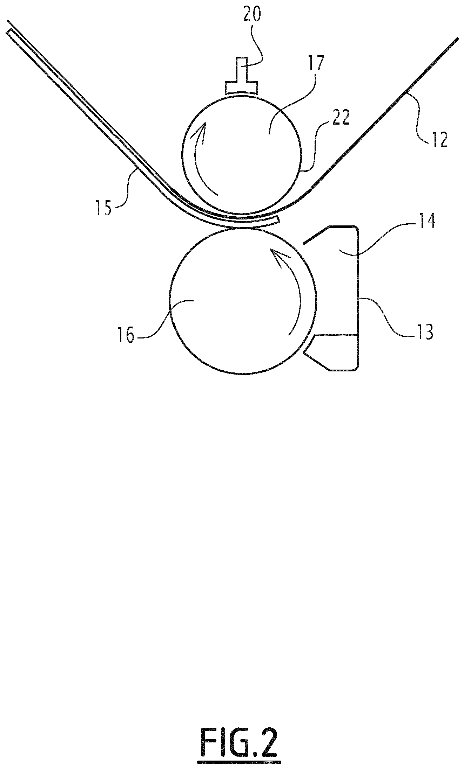

An example of coating machine 10 is schematically represented on figure 2.

The coating machine 10 comprises an ink reservoir 13, a coating element 14, a coating roller 16, a counter-roller 17 and a cleaning system 20.

In this example, ink is chosen as one specific possibility of a coating composition.

The coating roller 16, also called application roller, may be an engraved roller adapted to coat and/or print and/or cover part of the web 12 with the desired coated layer 15.

In the present case, the coating roller 16 is applying ink provided by the ink reservoir 13 onto the web 12.

A metered amount of coating from the reservoir 13 to the coating roller 16 is ensured by the coating element 14 such as a doctor blade.

Each of the rollers 16 and 17 is a rotating roller.

The counter-roller 17 may be part of a roller assembly.

The roller assembly is adapted to permit the movement of the web 12, which is intended to be coated by a coated layer.

The counter-roller 17 may be a drive roller and may drive the web 12 thought the coating machine.

The counter-roller 17 may also be an idle roller whose rotation is insured by the web. In both cases, the counter-roller 17 handles the web 12 on its outer surface 22, thereby dragging the web 12 or metering the coated layer 15.

The coating installation 5 further comprises a sensor 18.

Said sensor 18 may be positioned anywhere in the coating installation 5, preferably the sensor 18 is located at the end of the coating installation, before the rewinding machine 7.

The sensor 18 is a sensor adapted to take images or to collect data from the coated layer applied to the web 12 by the coating machine 10.

Data may be a defect mapping of the web 12.

As will be apparent from the described example, the data collected or acquired by the sensor 18 corresponds to quality data.

In particular, the sensor 18 may be able to detect primary and secondary defects.

The purpose of the sensor 18 is to find the repercussions of the fouling on the web, not correct it.

In order to achieve this goal, different types of sensors can be used.

For instance, according to the present example, the sensor 18 is a camera vision system, that is one or several cameras.

This type of sensor may capture the entirety of the web with linear cameras.

Other types of sensors need to have several of them to cover the whole web's width with sufficient detail.

The sensor 18 may also be adapted to the material used, efficient in detecting defects of small dimensions.

Data collected by sensor 18 may comprise the location associated with a defect to be transmitted to the cleaning system 20.

It is possible to use other type of sensors, each of them having a different technology and system of detection.

For example, it is possible to use a scanning system like on-line coating weight measurement, which can use e.g. X-ray or ultrasonic sensors and may use transmission, reflection or both types of sensors.

It is also possible to use interferometry which uses the interferences of waves to extract information.

This is not an exhaustive list, there are many types of sensors 18, which can be considered.

It is possible to use at least one visual sensor, but also a capacitive sensor, a frequency sensor, an air pressure sensor like the one used for rubber flaws' detection, or other sensors adapted to the used product and process.

The type of detection depends on the product parameter that is impacted by the fouling.

Although a camera vision system is preferably used thanks to its versatility, the detection of the defect may be also carried out by an operator.

The use of a sensor is optional. When necessary, the type of sensor is chosen upon the product and/or the process features.

Data collected by the sensor 18 may include for example thickness, color changes, surface structure, electrical parameters, geometric parameters or any other process output. In complex cases, it might be necessary to combine several types of sensors or detection systems to detect the impact of fouling on the web.

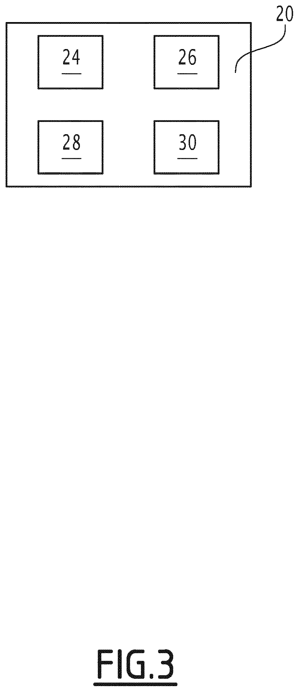

In the case of figure 3, the cleaning system 20 comprises an analyzing unit 28.

In other embodiments, the analyzing unit 28 may not be present, notably when the output of the analyzing unit 28 is obtained by another technique, such as by an operator.

In such case, the cleaning system 20 is provided with an interface unit, the interface unit being adapted to receive from an operator at least one defect property.

For the sake of exemplification, only the case where an analyzing unit 28 is present is described hereinafter.

In one embodiment, the analyzing unit 28 is connected to the sensor 18 and analyzes data output of the sensor 18 to drive the cleaning system 20. In one embodiment, the sensor 18 is able to detect and recognize defects according to parameters recorded in a database or using a calculator.

The analyzing unit 28 is adapted to receive data coming from the sensor 18. The received data are thus images of the layer coated and/or printed by the coating machine 10.

The analyzing unit 28 is adapted to analyze said data to detect and recognize at least one defect property.

The cleaning system 20 further comprises a robotic arm 24, a cleaning device 26 and a command unit 30.

The robotic arm 24 comprises an holding organ 32.

The cleaning device 26 is adapted to clean the outer surface 22 of the roller 17.

The cleaning device 26 may also be used to clean temperature-controlled rollers. As heat or cold may be used, which may speed-up the solidification of the coating composition onto the aera to be cleaned and render the cleaning process more difficult (ink solidified faster, or the ink melts and the stain spreads...), the cleaning device 26 may comprise adapted cleaning ancillary tools.

More generally, the cleaning device 26 is adapted to clean an area to be cleaned.

By "cleaning" in this context, it is meant that the cleaning device 26 is adapted to clean the area until its complete cleanliness or at least until the associated defect is completely removed (in synchronisation with the sensor 18 and the analyzing unit 28).

The cleaning device 26 may also be adapted to partially clean the area until the associated defect is sensibly removed in accordance with quality criteria.

Such area to be cleaned is characterized by area characteristics.

For instance, the localization of the center of the area to be cleaned is an area characteristic.

Such localization may be simplified as left lateral portion of the outer surface 22, central portion of the outer surface 22 and right lateral portion of the outer surface 22.

Another example of area characteristic is the size of the area to be cleaned.

According to the described example, the cleaning device 26 comprises a cleaning pad 34 adapted to be in contact with part of the outer surface 22 of the roller 17.

Such cleaning pad 34 having an outer surface 36 may be supplied with a fabric, a foam or any other material that can absorb or hold liquids within.

Preferably, the foam is a melamine foam.

Preferably, the fabric is a fabric containing microfibers.

The cleaning pad 34 may be composed of one or more of polyester, polyamide (nylon), wood pulp, cellulose, or cellulosic fibers.

Cleaning may be carried out by wiping, rubbing the outer surface 22 of the roller 17 with a dry or solvent-soaked pad.

The cleaning system 20 may further comprise a solvent reservoir 38 and a pressure unit 40. The pressure unit 40 may be adapted to send or pour the solvent from the solvent reservoir 28 to the cleaning pad 34.

The solvent reservoir 38 may also be disconnected from the cleaning system 20. In the case the solvent reservoir is independent from the cleaning system , the cleaning system 20 can soak the cleaning pad 34 in the solvent reservoir 38 to pick-up solvent.

The cleaning device 26 is held on the holding organ 32 of the robotic arm 24.

The command unit 30 is adapted to command the robotic arm 24 and the cleaning device 26 to carry out a cleaning task of a part of the outer surface 22 of the roller 17.

A cleaning task may correspond to a single operation, several operations or even several repetitive operations forming a cleaning cycle.

The command unit 30 is also able to control the quantity of solvent to distribute on the cleaning pad 34 and to deliver an adjusted amount of solvent.

Each cleaning task is characterized by cleaning parameters.

Cleaning parameters are, for instance, the following:
- the pressure applied for cleaning,
- the pulverizing time of cleaning product,
- the space between two pulverizations,
- the kind of ink used for the layer,
- the kind of solvent used,
- the technique used by the coating machine, and
- the number of cycles (if relevant).

Cleaning parameters may be stored in a database comprising a list of defect properties.

A defect property is a property of at least one defect of the layer.

For instance, the defect property is the presence or not of a defect.

According to another example, the defect property is the defect degree of the defect.

It is assumed here that each defect is associated with a respective defect degree, for instance degree 0 absence of defect, degree 1 slight defect, degree 2 severe defect and degree 3 very severe defect.

In a specific embodiment, the cleaning system 20 may be adapted to choose to clean or not a portion of the outer surface 22 of the roller 17 upon the defect severity value.

According to another illustration, several defect groups are defined, each defect of the layer belonging to one this defect group.

The defect property is thus the defect group to which the defect belongs to.

For instance, the defect groups are groups determined by ranges of size. As a specific example, small size defects, medium size defects and huge size defects.

Similar defect groups may be used with appearance and/or size.

Defect groups may also be made according to defect criticality.

Such defect criticality is usually defined based on the quality criteria of the user.

More generally, defect group may be a combination of several defect properties and linked to the criticality, severity or seriousness of a defect or flaw.

To achieve such operation of classification, the analyzing unit 28 is, for instance, implementing neural network.

In variant or in complement, the analyzing unit 28 may be provided with a self-learning ability.

As a specific example, the analyzing unit 28 is adapted to automatically rank the defect and to allocate the defect to the corresponding defect group.

The analyzing unit 28 is thus adapted to treat the data received from the sensor 18 in function of the defect property.

The command unit 30 is adapted to receive at least one defect property.

In the current case, the command unit 30 receives the at least one defect property from the analyzing unit.

The command unit 30 is adapted to trigger a cleaning task in accordance with each received defect property.

Such operating of the command unit 30 will now be illustrated with several specific use cases.

As a first example, the command unit 30 triggers a cleaning task in accordance with the defect degree.

For instance, the command unit 30 triggers a cleaning task only when the defect degree of the detected defect exceeds a predefined defect degree.

As another example, the command unit 30 chooses at least one area characteristic in function of the group of defects to which the detected defect belongs to.

In another example, the area to be cleaned can be targeted depending on the defects. A cleaning "mission" is given to the cleaning system. Mission triggered by vision and the mission stops when the fault disappears.

The area to be cleaned is precise. Cutting out the area to be cleaned allows to intervene in the right place while preventing the robot from moving along the entire length of the roller. Contact between the robot and the cylinder is ensured only for cleaning. Such cleaning system 20 provides with a faster reaction to any issue on a roller 17.

As a matter of fact, the reaction time to launch the cleaning operations is limited by the time required for the web 12 to travel along the distance between the roller to be cleaned and the sensor.

Therefore, the faster the web 12 travels, the faster the cleaning operations can be launched, the faster the apparition of defects is annealed, the better the coating quality is. The cleaning operations can be carried out while the web 12 is treated, during coating or printing. There is no need to wait that each part of the web 12 be removed from the roller 17.

This also enables to provide with energy saving with notably less movement of the robot, saving of solvent or saving in pumping and distribution of solvent.

The mission cleaning mode is also more precise and therefore more efficient because cleaning the exact location avoids to move, displace or extend the area to be cleaned laterally. If the pad moves and presses at the same time over a wide span, then the area to be cleaned may spread and generate new defects or shift or extend the defect.

The quantity of solvent is regulated to the strictly necessary. In particular, 'displacing fouling' or generating secondary defects (too much solvent) are avoided. The fumes of the solvents used for cleaning are also reduced.

Such cleaning system 20 also avoids unnecessary friction of the pad. This provides with improved safety of the installation and reduces risk of ignition in ATEX zones. Indeed, friction can generate sparks or heat.

Furthermore, with the cleaning system 20, the dosing of the strictly necessary quantity of solvents during cleaning is achieved thanks to automated dosing (versus manual dosing) allowing a healthier environment (air quality) and more secure for operators (no need to access the coating area containing high speed rotating machines).

The cleaning system 20 also provides the advantage of controlled and improved cleaning responsiveness. The response time between detection of the defect and cleaning of the corresponding zone is limited to the time corresponding to the distance traveled by the film between the coating zone and the zone of detection of the defect. The limiting factor for responsiveness depends on the scrolling speed. The faster the film goes, the greater the reactivity, and the fewer losses or scraps are generated. The overall yield of the process is increased.

In addition, the use of such cleaning system 20 enables to reduce the amount of waste due to defects by 10%.

The proposed cleaning system is an automated, autonomous and compact system.

The cleaning system provides with the advantage of a limited system size. This is notably interesting for insertion in a narrow operability zone. The cleaning system even provides access to zones, which are closed, secure, and not accessible by an operator.

The cleaning system also reduces interventions and maintenance. In particular, there is no need to introduce mobile tools or accessories into the zone.

Downtime is also limited since the coating line can operate continuously at high speed, 24 hours a day without interruption, thereby resulting in an optimal production.

The cleaning system also provides with the advantage of a remote trajectory of the robot for its maintenance/upkeep operations.

In particular, the cleaning system can leave the coating zone (operability zone), allowing in particular the replacement of the used pad, the refilling of the solvent tank in complete safety because the operator does not need to enter the coating zone. These operations can be carried out outside the operability zone and in masked time.

This means that the cleaning system also brings an overall improvement of working conditions.

It should be understood that other embodiments and/or context of use of such cleaning system 20 may be considered. In particular, the sensor 18 can be placed after coating before film formation or after the dry coated layer formation.

The sensor 18 can also be placed before the coating system, to remove impurities prior to coating operations. The sensor 18 may also be used differently.

For instance, the sensor 18 and the analyzing unit 20 may also be used to track the cleaning efficiency, to follow the removal of the defect or the emergence of new defects or the remaining of the defects.

A cartography of the coated film could be generated and stored with information on the localization and size of the defects that have not been removed. This may be used to monitor quality indicators.

The cartography may be used to check the efficiency of the cleaning system 20 and to compare the presence of remaining defects before and after the missions of the robots have been launched.

The cleaning system 20 may be the cleaning system of document US 10040101 or the one disclosed in document US 11192149.

It can also be pointed out that the cleaning system 20 may clean other types of rollers such as backing rolls, transfer rolls, gravure rolls, metering rolls, idle rolls, rollers in dryers and embossing rolls...

The cleaning system 20 is thus compatible with any and all kinds of rollers used in web handling thin film processes.

In particular, the cleaning system 20 may also be used to clean any conveyors or drive rollers.

In addition, the roller may be in fact a conveyor belt carried by a roller assembly.

In that sense, the element has an infinite curvature and therefore substantially forms a plane.

More generally, the cleaning system 20 is thus adapted to clean the outer surface of any moving element of the coating installation 5. Preferably, the cleaning system 20 is implemented within coating installations subjected to a high level of fouling such as for wet coating, printing or laminating.

The cleaning system 20 may be used for any number of rollers, notably for 3 or 5 rollers system and is adapted for any kind of material for the roller (for instance, EPDM, steel, HNBR, tungsten or chromed steel).

Similarly, the cleaning system 20 may be used in other coating / printing / shaping techniques.

Different versions are used for both coating and printing. One may also relate these techniques to surface finishing. These techniques may be sorted by their number of rollers, their direction of rotation, their design.

For instance, one common technique is the three-roller system (fountain roller color deck). The conventional three-roller printing deck is mounted on a pair of frames or consoles and normally consists of a pair of angular bearing blocks to take the plate cylinder and a pair of inking rollers bearing blocks to accommodate the inking roller (anilox roller and fountain roller). An arrangement to receive the ink fountain would usually be incorporated.

The cleaning system 20 may also be used in roll coating or in roll-free coating.

In roll coating and related processes, wet coverage is determined by the flow rate of the coating composition and the coating speed. Roll coating is a coating method whereby the fluid flow in a nip or gap between a pair of rotating rolls controlling both the thickness and the uniformity of the coated film. This extends to include a coating roll of infinite radius covers flat sheets, considering a roll of zero velocity covers knives and blades.

Gravure coating allows to cover a web with a thin coating layer, down to a few micrometers, typically around 3 µm.

When coating a thin layer of pigmented back ink, fouling within the coating machine causes defects on the coated layer : the back-up roller is soiled by ink coming for example from the coating element or the ink reservoir. Roll fouling may be due to ink splashes, ink in the form of droplets (due to aerodynamic effect, volatility of composition...), misting, leaks... In general, droplets of ink 'fly' from the doctor blade chamber, the reservoir or the application roller to the back-up roll (material projection).

Then, the ink dries more or less rapidly, depending on ink composition, pigments, or solvents used. An excess of dry and solid ink on the back-up roll generates an additional and undesired local thickness whereby the actual coating composition to be applied to the web could be pushed away. This is the location of a defect on the coated web such as a white dots, blanks, or voids : the coating composition is missing at this location. These may be called 'sleeve defects' because they are due to sleeve fouling.

Using conventional cleaning techniques (robots) may generate new defects when trying to clean the sleeve. As a matter of fact, the fouled area may be enlarged or displaced, for example when the dried ink is spread over the sleeve.

In addition, the thinner the web to be coated is, the more severe is the impact of fouling on the coated web quality.

The cleaning system 20 allows to efficiently clean the sleeve upon detection in real time of the appearance and the recognition of the sleeve defect on the coated web 12.

One may be able to detect fouling directly on the sleeve.

However, when the sensor 18 points the roller surface, suitable detection cannot be reached while coating dark coating compositions. Depending on the type or back-up roll used, the contrast between the sleeve aspect and the fouled area is often too low (black ink over black cover) or the shininess of the anilox roller may disturb the fouling detection.

In addition, the rotation of the roller increases the difficulty to spot the fouled aeras to be cleaned. For that reason, the developed method to clean the sleeve is first to control the coated layer of the web and then to launch cleaning operation to remove fouling on the sleeve.

Thanks to the use of the cleaning system 20, cleaning occurs without adding new defects. The cleaning system 20 may be activated once the defect has appeared, been detected, and recognized. The cleaning system 20 therefore operates as a curative defect treatment system. Furthermore, the cleaning system 20 can selectively clean a specific area to be cleaned, in accordance with the analyzing unit command. Cleaning operation is precise, on-demand, starts and stops upon emergence and removal of the defect.

The cleaning system 20 may also exhibit a move with 3 degrees of freedom relative to the surface to be cleaned to offset the roller curvature and its speed. The cleaning device route may sinusoidal, elliptic, orbital, linear...

Forward roll coating may also benefit from the cleaning system 20.

With such technique, web travels over a back-up roll while the application roller is turning in the same direction as the back-up roller at same or different speed. The coating composition may be supplied by a slot die.

In another design, a fountain roll can pick up the liquid from a pan and transfer it to the applicator roll to give a three-roll pan-fed system. A third roller may be added to butt against the application roll, with the liquid supplied to the nip between them. Any number of rolls may be used, and the rolls may be smooth, chrome-plated steel, or rubber-covered. Ceramic rolls may be also used.

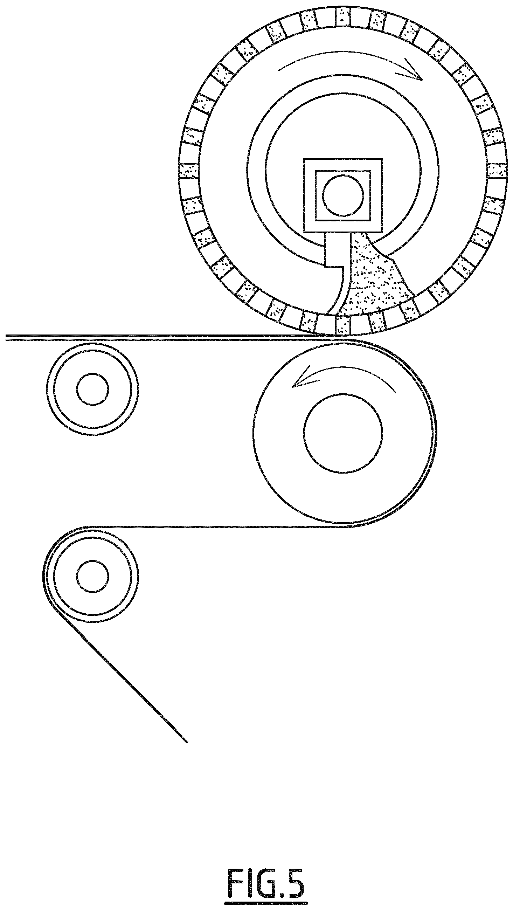

In case of screen printing as schematically illustrated on figure 5, particularly in rotary screen printing, the screen is a seamless perforated nickel cylinder, the degree of perforation is expressed by the mesh number indicating the number of holes per linear inch. A squeegee is mounted inside the perforated roller to supply and distribute the coating composition (paste). The squeegee blade pushes the paste through the perforated screen. A whisper blade may smooth the applied coating layer. Related coating techniques are pattern-type coating, dot coating, plain paste coating, foam coating or the like. In rotary screen printing, the cleaning system is adapted to clean the outer surface of the roller carrying the web.

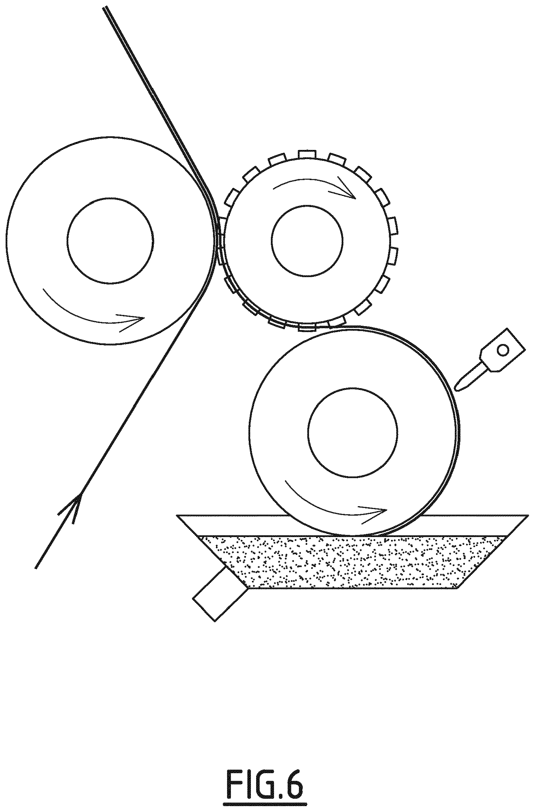

Flexograghy technique (more often named flexo) can be considered in a coating installation. Such technique is schematically represented on figure 6.

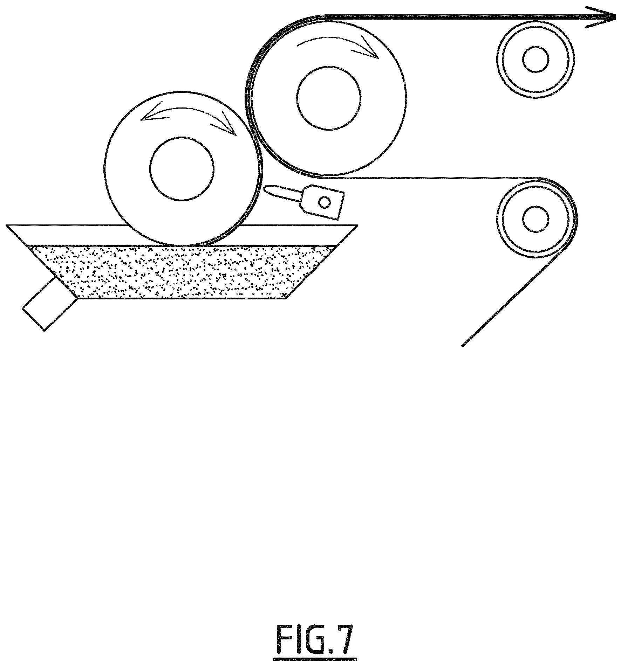

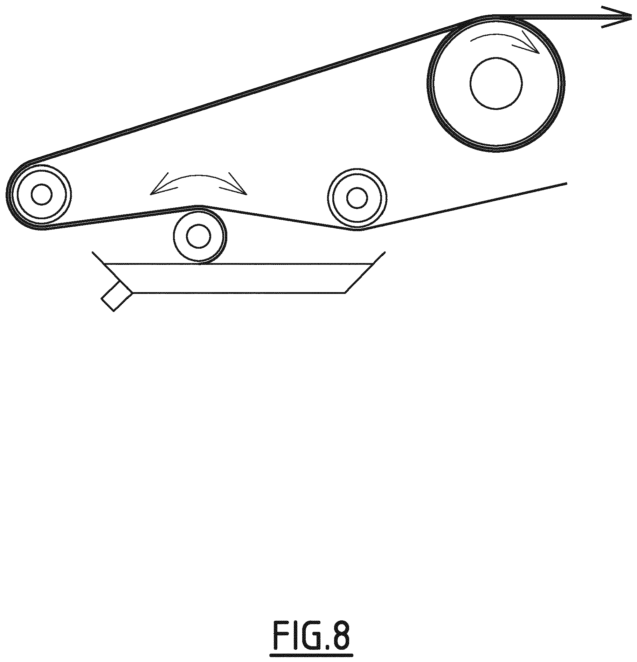

Such printing technique is a quality printing technique (in comparison with letterpress, gravure, offset) for the packaging sector. The web to print may be a packaging material such as paper, plastic films, aluminum foil ... Flexo is useful for high flexibility and qualitative printing for a wide range of materials, and large and variable range of speeds. In flexography, the web may be printed with a pattern defined by an intermediate roller. The area to clean is located at the outer surface of the counter-roller forming a nip with the intermediate roller. During coating using an engraved roller (figure 7) or a micro roller (figure 8), a pick-up roll transports the coating composition from a reservoir to the web. For both coating techniques, increasing the coating speed also increases the propensity to stain nearby rollers and therefore to affect the surface of the coated web.

The cleaning system 20 may also be used in kiss coating.

In kiss coating, the web traveling in the same or opposite direction to the applicator roll may be held against the application roll only by the web tension. The rollers to be cleaned may be part of the roller assembly used to convey the web.

The cleaning system 20 may also be used in reverse roll coating.

In reverse roll coating, the web is transported in the opposite direction than the application roll. The back-up roll - sometimes called the "sleeve" - is usually rubber-covered and the web travels between the back-up roll and the application roller, pressing against each other to meter the amount of coating composition and therefore to control its thickness or basis weight applied to the web. The amount of liquid transferred to the web may be controlled by the application roll, which is a metering roll rotating in the opposite direction.

Several different reverse roll configurations are possible. In many cases, a doctor blade is used to wipe off the excess of coating onto the application roll within the doctor blade chamber. This technique allows meter the liquid coating composition onto the roll shortly after delivering the coating composition onto the application roll from the reservoir.

The cleaning system may also be implemented for dip coating, whereby the web is soaked into a liquid. The excess of coating is removed from the web using a pair of squeeze rollers. Splashed from introducing and exiting the web in the coating composition would be the major source of defects due to fouling nearby rollers.

The cleaning system 20 may also be used in hot melt coating.

Other techniques that can be benefit from the cleaning system 20 are rod coating, wire-wound rod coating (Meyer rod), doctors off excess coating liquid, knife coating, blade coating, air-knife coating, dip coating...

In all cases, the cleaning system 20 enables to increase the efficiency of a coating machine.

This is advantageous for many applications : for flexible thin films (printing packaging...), food containers, paper, textiles, technical coating, prepregs, adhesive tapes, artificial leather production, batteries (electrode plate or primer on conductive surfaces), one-color printing machine (screen printing).

In a specific technical domain, the thin coated web is used for thermal transfer printing. For thermal transfer printing, the coated web is cut into narrow width ribbons. The quality of inked ribbons is essential at high printing speed, for performance-demanding end-uses and/or for heavy-duty printers. The quality of the thin coated web has therefore a direct impact on the print quality (print sensibility, darkness...). Such ribbons are often used to print labels, tags...

The cleaning system 20 may also be used for the printing industry and within printers (electrophotography, laser printing, thermal transfer printers...).

The cleaning system 20 may also be used in plastic sheet manufacturing : a composition is extruded by itself. The plastic sheet may also be produced by coating on a substrate and is then released from the substrate after it has been solidified (peeling).

Such cleaning system 20 could also be used for non-flexible webs to be coated / printed such as production of hard floor covering.

The cleaning system 20 may also be particularly useful for high added-value articles, demanding end-uses requiring zero-defect products.

Indeed, reduction of the number / size of defects and the cartography of remaining defects allows the end-user to know where are located defects and/or to discard the zone with remaining defects.

The application of glue or adhesive by any technique such as wet coating or dry laminating may also be valuable, for instance during lamination of two surfaces using liquids or pressure sensitive adhesives.

## Claims

1. A cleaning system (20) adapted to clean the outer surface (22) of a moving element, notably a roller (17), of a coating installation (5), the coating installation (5) comprising a coating machine (10) adapted to coat and/or print and/or shape a layer on a web (12), the cleaning system (20) comprising:
- a robotic arm (24) comprising an holding organ (32),
- a cleaning device (26) held on the holding organ (32), the cleaning device (26) being adapted to clean the outer surface (22) of the moving element (17),
- a command unit (30) adapted to command the robotic arm (24) and the cleaning device (26) to carry out a cleaning task of a part of the outer surface (22) of the moving element (17),
the command unit (30) being adapted to receive at least one defect property and to trigger a cleaning task in accordance with each received defect property, a defect property being a property of at least one defect of the layer.

2. The cleaning system according to claim 1, wherein the cleaning system (20) further comprises an analyzing unit (28) adapted to:
- receive data coming from a sensor (18), the data being images of the layer coated and/or printed by the coating machine (10), and
- analyze said data to detect at least one defect property of at least one defect of the layer.

3. The cleaning system according to claim 1, wherein the cleaning device (26) is provided with an interface unit, the interface unit being adapted to receive from a user pieces of information concerning at least one defect of the layer, the command unit (30) being adapted to command the robotic arm (24) and the cleaning device (26) also in accordance with the pieces of information concerning at least one defect of the layer.

4. The cleaning system according to claim 2, wherein at least one defect property detected by the analyzing unit (28) is the presence or not of a defect.

5. The cleaning system according to any one of the claims 1 to 4, wherein each defect is associated with a degree of defect, one of the defect property being the defect degree.

6. The cleaning system according to claim 5, wherein the command unit (30) is adapted to trigger a cleaning task when the defect degree of the detected defect exceeds a predefined defect degree.

7. The cleaning system according to any one of the claims 1 to 6, wherein each defect of the layer belongs to a respective predefined group of defects, one defect property being the group of defects to which the defect belongs, the area characteristics of the area to be cleaned by the cleaning device (26) being chosen in accordance with said defect property.

8. The cleaning system according to claim 7, wherein one area characteristic is the surface of the area to be cleaned.

9. The cleaning system according to claim 8, wherein one area characteristic is the localization of the center of the area to be cleaned, the localization of the center of the area to be cleaned being preferably chosen among three zones : a left lateral portion of the moving element (17), a central portion of the moving element (17) and a right lateral portion of the moving element (17).

10. The cleaning system according to any one of the claims 1 to 9, wherein the cleaning task is **characterized by** cleaning parameters, the command unit (30) being adapted to calculate each cleaning parameter in function of the defect properties.

11. The cleaning system according to any one of the claims 1 to 10, wherein the cleaning device (26) comprises a cleaning pad adapted to be in contact with the part of the outer surface (22) of the moving element (17), the cleaning pad having preferably an outer surface (22) with a foam, the foam being notably a melamine foam.

12. The cleaning system according to any one of the claims 1 to 11, wherein the cleaning device (26) further comprises a cleaning pad, a solvent reservoir and a pressure unit, the pressure unit being adapted to send the solvent from the solvent reservoir to the cleaning pad.

13. Coating machine (10) comprising a cleaning system (20) according to any one of the claims 1 to 12.

14. Coating installation (5) comprising a cleaning system (20) according to any one of the claims 1 to 12.

15. Method for cleaning the outer surface (22) of a moving element, notably a roller (17), of a coating installation (5), the coating installation (5) comprising a coating machine (10) adapted to coat and/or print and/or shape a layer on a web (12), the method being carried out by a cleaning system (20) comprising:
- a robotic arm (24) comprising an holding organ (32),
- a cleaning device (26) held on the holding organ (32), the cleaning device (26) being adapted to clean the outer surface (22) of the moving element (17),
- a command unit (30) adapted to command the robotic arm (24) and the cleaning device (26) to carry out a cleaning task of a part of the outer surface (22) of the moving element (17),
the method comprising:
- receiving at least one defect property, a defect property being a property of at least one defect of the layer
- triggering a cleaning task in accordance with each received defect property.
